# EUROPÄISCHE PATENTSCHRIFT

(11) **EP 3 527 468 B1**
(45) Veröffentlichungstag und Bekanntmachung des Hinweises auf die Patenterteilung: **02.07.2025**
(21) Anmeldenummer: 19154816.3
(22) Anmeldetag: 31.01.2019
(51) Int. Cl.: B62D 29/00, B62D 33/04

(54) **KOFFERAUFBAU FÜR NUTZFAHRZEUGE**
BOX BODY FOR COMMERCIAL VEHICLES
CAISSE POUR VÉHICULES UTILITAIRES

(30) Priorität: 15.02.2018 DE 102018001179
(43) Veröffentlichungstag der Anmeldung: 21.08.2019
(73) Patentinhaber: Fahrzeugwerk Bernard Krone GmbH & Co. KG, 49757 Werlte (DE)
(72) Erfinder: Thiel, Mario, 19273 Teldau (DE)
(74) Vertreter: Busse & Busse

(56) Entgegenhaltungen:
- EP-A1- 0 267 152
- EP-A1- 0 607 575
- EP-A1- 2 116 457
- EP-A2- 2 927 102
- DE-U1- 202016 102 067
- US-A1- 2010 212 248

## Beschreibung

Die Erfindung bezieht sich auf einen Kofferaufbau für Nutzfahrzeuge mit einem Dachteil, einer Seitenwand, einem Ladegutboden sowie einer Vorderwand und einer Rückwand, wobei zumindest die insbesondere mit einer Rückwandtür versehene Rückwand mit einer Seitenwand verbunden ist.

Kofferaufbauten der vorgenannten Art sind bekannt und werden z. B. bei temperaturgedämmten Nutzfahrzeugen eingesetzt. Bei der Montage der Aufbauten entstehen vielfach Hohlräume zwischen einzelnen Aufbaukomponenten, die nachträglich ausgeschäumt werden, mit Füllstücken versehen werden, vergossen werden oder bei denen solche Hohlräume nicht weiter verfüllt werden.

Diese nachträglichen Arbeiten sind zeitaufwendig. So kann es beim nachträglichen Ausschäumen zu unerwünschten Schaumaustritten auf Sichtflächen kommen mit den notwendigen nachträglichen Reinigungsarbeiten bzw. im schlimmsten Fall sogar, dass solche Sichtflächen neu zu lackieren sind. Zerspanend hergestellte, passgenaue Füllstücke verursachen auch einen hohen Aufwand mit entsprechenden Kosten. Sollen Hohlräume vergossen werden, lassen dieses nur bestimmte Hohlraumgeometrien zu. Bleiben die Hohlräume nicht verfüllt, kommt es insbesondere bei temperaturgedämmten Nutzfahrzeugen zu verschlechterten K-Werten, zu Kondenswasserbildung und somit Korrosionen.

Aus der US 2010/0212248 ist ein Verbinder zur Verbindung einer Seitenwand mit einer Eckrunge bekannt.

Es ist Aufgabe der vorliegenden Erfindung, einen Kofferaufbau für Nutzfahrzeuge der eingangs genannten Art zu verbessern.

Der Kofferaufbau für Nutzfahrzeuge zeichnet sich dadurch aus, dass zwischen der Seitenwand und der Rückwand ein lösbar mit der Seitenwand verbindbares Portalprofil angeordnet ist mit einem über eine Abdeckung verschließbaren inneren Freiraum, der mit einem Dämmmaterial verfüllt ist. Am Portalprofil ist ein Gelenk der Rückwandtür befestigt.

Damit ist ein Kofferaufbau geschaffen, bei dem die Seitenwände, das Dachteil, die Rückwand und die Vorderwand als vorgefertigte Montageeinheiten zur Verfügung zu stellen sind, die durch das endseitig vorzusehende Portalprofil zu verbinden sind. Erfindungsgemäß ist das Gelenk einer Rückwandtür an diesem Portalprofil befestigt. Da dieses Portalprofil einen inneren Freiraum bzw. Hohlraum hat, der an einer offenen Seite des Portalprofils durch eine Abdeckung zu verschließen ist, kann das Portalprofil ebenfalls in montagefreundlicher Weise mit einem Dämmmaterial verfüllt werden, indem beispielsweise das Dämmmaterial dort eingeblasen wird. Auch eine Seitenwand oder Seitenwandteile können über das Portalprofil und z. B. eine dortige Schraubverbindung befestigt werden. Bei der Abdeckung handelt es sich vorzugsweise um eine Kunststoffabdeckung. Kommt es zu einem Anfahrschaden oder einem Unfall des Nutzfahrzeuges, kann das Portalprofil auf einfache Art und Weise demontiert werden und kann nachträglich im reparierten Zustand wieder mit dem Dämmmaterial versehen werden.

Weitere vorteilhafte Ausgestaltungen ergeben sich aus weiteren Unteransprüchen, der nachfolgenden Beschreibung und der Zeichnung. In der Zeichnung zeigen:

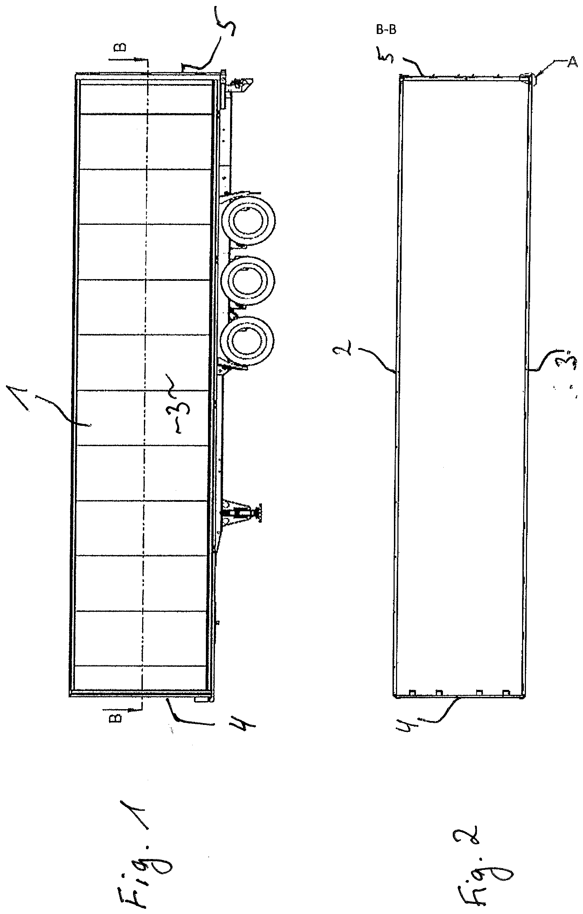

- Fig. 1:: Ein Ausführungsbeispiel eines Nutzfahrzeuges in Gestalt eines Sattelaufliegers mit einem Ausführungsbeispiel eines Kofferaufbaus nach der Erfindung;
- Fig. 2:: eine Draufsicht auf das Ausführungsbeispiel nach Fig. 1 gemäß der Schnittlinie B-B in Fig. 1;
- Fig. 3:: ausschnittweise vergrößert eine geschnittene Draufsicht auf den heckseitigen Bereich einer Seitenwand mit dem Portalprofil und einer Heckportaltür (Zustand: Tür geschlossen), gemäß Detail A in Fig. 2.

In der Zeichnung sind übereinstimmende Teile mit übereinstimmenden Bezugsziffern versehen.

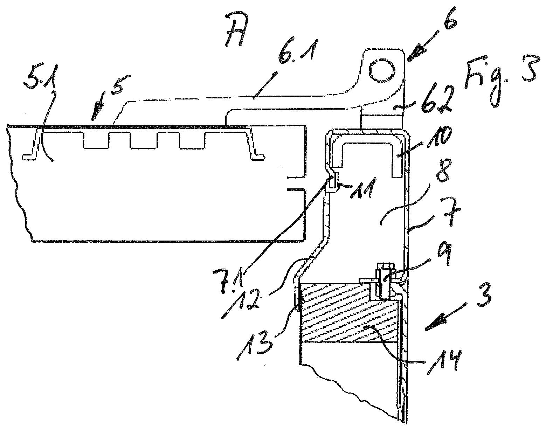

Mit 1 ist ein Kofferaufbau eines Nutzfahrzeuges beziffert, der Seitenwände 2 und 3 aufweist, eine Vorderwand 4 sowie eine Rückwand 5, die z. B. eine Heckportaltür 5.1, Rückwandtür (Fig. 3) aufweisen kann. In Fig. 3 ist gezeigt, dass die Rückwand 5 eine Heckportaltür 5.1 aufweist, die über ein Scharnier 6 mit einem Scharnierhebel 6.1 und einem Anschlussstück 6.2 mit einer Seitenwand 3 verbunden ist.

An dieser Seitenwand 3 ist das Portalprofil 7 mit einem inneren Freiraum 8 über eine Schraubverbindung befestigt. Dieses Portalprofil 7 ist ein metallisches Profil, dass über ein C- bzw. U-förmige inneres metallisches Versteifungsprofil 10 ausgesteift ist. Um dieses metallische Versteifungsprofil 10 ist das Portalprofil 7 umgebogen und weist einen Schenkel 7.1 auf, der in eine Tasche 11 eine Abdeckung 12 im montierten Zustand eingreifen kann. Das andere Ende der Abdeckung 12 liegt an einem doppelten Klebeband 13 an, das auf die Innenseite der Seitenwand 3 aufgeklebt ist. In die Seitenwand 3 ist ein Dämmelement 14 eingebracht. In den Freiraum 8 ist nach Montage der Teile ein Dämmmaterial, beispielsweise ein Kunststoffdämmmaterial, einzublasen. Damit liegt ein optimal wärmegedämmter Kofferaufbau vor, der im Demontagefall leicht zu öffnen, zu demontieren, zu reinigen und wieder mit Dämmmaterial zu befüllen ist. Dabei kann das Dämmmaterial rückstandsfrei abgebaut und entsorgt werden. Derartige Portalprofile 7 können auch innerhalb der Seitenwand z. B. Türen, andere Öffnungen und/oder Bauteile aufnehmen, die gleichfalls mit einer Einblasdämmung versehen werden können.

## Patentansprüche

1. Kofferaufbau (1) für Nutzfahrzeuge mit einem Dachteil, Seitenwänden (2, 3), einem Ladegutboden sowie einer Vorderwand (4) und einer Rückwand (5), wobei zumindest die mit einer Rückwandtür (5.1) versehene Rückwand mit einer Seitenwand (2, 3) verbunden ist, wobei zwischen der Seitenwand (2, 3) und einer Rückwand (5) ein mit der Seitenwand (2, 3) verbindbares Portalprofil (7) angeordnet ist mit einem über eine Abdeckung (12) verschließbaren inneren Freiraum (8), der mit einem Dämmmaterial verfüllbar ist, wobei am Portalprofil (7) ein Gelenk der Rückwandtür (5.1) befestigt ist, **dadurch gekennzeichnet, dass** das Portalprofil (7) lösbar mit der Seitenwand (2, 3) verbindbar angeordnet ist und mit dem Dämmmaterial verfüllt ist..

2. Kofferaufbau (1) nach Anspruch 1, **dadurch gekennzeichnet, dass** das Dämmmaterial in den durch die Abdeckung (12) verschließbaren Freiraum (8) einblasbar ist.

3. Kofferaufbau (1) nach Anspruch 1 oder 2, **dadurch gekennzeichnet, dass** das Dämmmaterial kein aushärtbares Kunststoffmaterial wie Glasfaserschnitzel u. dgl. klebestofffreie Dämmmaterialien, Glaswolle, Mineralwolle, Zellulosematerialien ist.

4. Kofferaufbau nach einem der Ansprüche 1 bis 3, **dadurch gekennzeichnet, dass** das Portalprofil (7) im Bereich seiner Verbindung mit der Rückwand (5) mit einem Versteifungsprofil (10) versehen ist.

5. Kofferaufbau (1) nach Anspruch 4, **dadurch gekennzeichnet, dass** das Versteifungsprofil (10) zumindest einen in den Freiraum (8) ragenden Schenkel aufweist.

6. Kofferaufbau nach einem der Ansprüche 1 bis 5, **dadurch gekennzeichnet, dass** die Abdeckung (12) aus einem Kunststoffmaterial besteht.

7. Kofferaufbau nach einem der Ansprüche 1 bis 6, **dadurch gekennzeichnet, dass** die Abdeckung (12) einenends eine Tasche (11) aufweist, in die ein Ende (7.1) des Portalprofils (7) eingreift.

8. Kofferaufbau nach einem der Ansprüche 1 bis 8, **dadurch gekennzeichnet, dass** an der Seitenwand (2, 3) an der Verbindungsstelle zu dem Freiraum (8) des Portalprofils (7) ein Dämmelement (14) in die Seitenwand (2, 3) eingebracht ist.

## Claims

1. Box body (1) for commercial vehicles with a roof section, side walls (2, 3), a load floor, a front wall (4) and a rear wall (5), wherein at least the rear wall provided with a rear wall door (5.1) is connected with a side wall (2, 3), wherein a portal profile (7) connectable to the side wall (2, 3) is arranged between the side wall (2, 3) and a rear wall (5) with an inner free space (8) closable by a cover (12), which can be filled with an insulating material, wherein a hinge of the rear wall door (5.1) is fastened to the portal profile (7), **characterized in that** the portal profile (7) is arranged so as to be detachably connectable to the side wall (2, 3) and is filled with the insulating material.

2. Box body (1) according to claim 1, **characterized in that** the insulating material can be blown into the free space (8) which can be closed by the cover (12).

3. Box body (1) according to claim 1 or 2, **characterized in that** the insulating material is not a curable plastic material such as glass fiber chips and similar non-adhesive insulating materials, glass wool, mineral wool, cellulose materials.

4. Box body according to one of claims 1 to 3, **characterized in that** the portal profile (7) is provided with a stiffening profile (10) in the region of its connection with the rear wall (5).

5. Box body (1) according to claim 4, **characterized in that** the stiffening profile (10) has at least one leg projecting into the free space (8).

6. Box body according to any one of claims 1 to 5, **characterized in that** the cover (12) is made of a plastic material.

7. Box body according to one of claims 1 to 6, **characterized in that** the cover (12) has a pocket (11) at one end, into which an end (7.1) of the portal profile (7) engages.

8. Box body according to one of claims 1 to 8, **characterized in that** an insulating element (14) is introduced into the side wall (2, 3) at the connection point with the free space (8) of the portal profile (7).

## Revendications

1. Caisse (1) pour véhicules utilitaires avec une partie de toit, des parois latérales (2, 3), un plancher de chargement de marchandises ainsi qu'une paroi avant (4) et une paroi arrière (5), au moins la paroi arrière pourvue d'une porte (5.1) de paroi arrière étant reliée à une paroi latérale (2, 3), un profilé de portique (7) pouvant être relié à la paroi latérale (2, 3), avec un espace libre (8) intérieur pouvant être fermé par un recouvrement (12), pouvant être rempli d'un matériau isolant, étant disposé entre la paroi latérale (2, 3) et une paroi arrière (5), une articulation de la porte (5.1) de paroi arrière étant fixée sur le profilé de portique (7), **caractérisée en ce que** le profilé de portique (7) peut être relié de manière amovible à la paroi latérale (2, 3) et peut être rempli d'un matériau isolant.

2. Caisse (1) selon la revendication 1, **caractérisée en ce que** le matériau isolant peut être soufflé dans l'espace libre (8) pouvant être fermé par le recouvrement (12).

3. Caisse (1) selon la revendication 1 ou 2, **caractérisée en ce que** le matériau isolant n'est pas un matériau en matière plastique durcissable comme des copeaux de fibre de verre et des matériaux isolants similaires sans colle, de la laine de verre, de la laine minérale, des matériaux cellulosiques.

4. Caisse selon l'une des revendications 1 à 3, **caractérisée en ce que** le profilé de portique (7) est pourvu d'un profilé de raidissement (10) dans la zone de sa liaison à la paroi arrière (5).

5. Caisse (1) selon la revendication 4, **caractérisée en ce que** le profilé de raidissement (10) comporte au moins une branche dépassant dans l'espace libre (8).

6. Caisse selon l'une des revendications 1 à 5, **caractérisée en ce que** le recouvrement (12) est constitué d'un matériau en matière plastique.

7. Caisse selon l'une des revendications 1 à 6, **caractérisée en ce que** le recouvrement (12) comporte à une extrémité une poche (11), avec laquelle une extrémité (7.1) du profilé de portique (7) vient en prise.

8. Caisse selon l'une des revendications 1 à 8, **caractérisée en ce qu'**un élément isolant (14) est introduit dans la paroi latérale (2, 3), sur la paroi latérale (2, 3) sur le point de liaison à l'espace libre (8) du profilé de portique (7).
